Europäisches Patentamt

**European Patent Office**

Office européen des brevets

(11) Publication number: **0 100 555**
**A1**

# (12) EUROPEAN PATENT APPLICATION

(21) Application number: **83107631.0**

(22) Date of filing: **03.08.83**

(51) Int. Cl.³: **F 16 B 31/02**
**F 16 B 43/00**

(30) Priority: **04.08.82 US 404950**

(43) Date of publication of application:
**15.02.84 Bulletin 84/7**

(84) Designated Contracting States:
**AT BE CH DE FR GB IT LI LU NL SE**

(71) Applicant: **Bethlehem Steel Corporation**
**701 East Third Street**
**Bethlehem Pennsylvania 18016(US)**

(72) Inventor: **Schaeffer, Charles W.**
**423 E. Pine St.**
**Lebanon, Pa 17042(US)**

(72) Inventor: **Spengler, Emerson D.**
**714 South 14th St.**
**Lebanon, Pa 17042(US)**

(74) Representative: **Reichel, Wolfgang, Dipl.-Ing. et al,**
**Reichel und Reichel Parkstrasse 13**
**D-6000 Frankfurt am Main 1(DE)**

(54) **Load indicating washer and fastener assembly including such load indicating washer.**

(57) A non-heat treated load indicating washer (10) for visually indicating the magnitude of compressive force applied by a fastener (34, 36, 46) to opposed surfaces of the washer and a fastener assembly including such load indicating washer. The washer has a number of integral protuberances (14) struck from the washer and spaced from the inner (16) and outer (18) peripheries of the washer, each protuberance has a truncated concave basal surface (24) lying within the confines of the washer and a raised convex surface (32). The number and size of the protuberances (14) depend on the compressive force such that the protuberances will deform into the washer when the compressive force reaches a predetermined magnitude.

FIG. 5

EP 0 100 555 A1

Load indicating washer and fastener assembly
including such load indicating washer
_____

This invention relates to a load indicator washer and a fastener assembly, and, more particularly, to a load indicator washer for use with a bolt which washer provides means to determine the tension in the bolt during tightening of the bolt in a fastener assembly.

U.S. Patent No. 3,187,621 to Turner (1965) discloses a load indicator washer having a number of protuberances struck from the body of the washer. The protuberances have a concave basal surface lying within the confines of the body and a complementary convex surface which extends out of the plane of the body of the washer. When a compressive force is applied to the opposed surfaces of the washer by a fastener, such as a bolt, the protuberances or portions raised from the body of the washer deformed into the body of the washer. The distance that the raised portions extend out of the body is an indication of the tension in the bolt. The washer of this patent performed reasonably well. However, the washer had to be heat treated prior to use.

It is an object of this invention to provide an economical load indicating washer which more uniformly and consistently indicates a given load.

It is also an object of this invention to provide a load indicating washer which does not have to be heat treated prior to use.

It is a further object of this invention to provide a load indicating washer which does not have to be heat treated after it is made and thus can be tested for load indication at the machine which makes the washer. After such testing, if necessary, the machine can be adjusted to provide a proper load indicator washer.

The above objects can be accomplished by a load indicating washer for visually indicating the magnitude of a compressive force applied by a fastener to opposed surfaces of the washer. The washer has a body portion, a plurality of protuberances struck from the body portion at spaced intervals and integrally formed with the material of the body portion. The protuberances are spaced from the inner and outer peripheries of the body with each protuberance being oblong in outline and defined by substantially parallel side surfaces. Each protuberance has a truncated concave basal surface lying within the confines of the body portion, i.e. the truncated concave basal surface has arcuate end surfaces and a flat center surface, and a convex surface which is a raised portion extending out of the plane of the body portion. The number and size of the protuberances depend on the compressive force intended to be applied to the washer. In addition, the number and size of the protuberances are such that the raised portions plastically deform into the body portion when the compressive force reaches a predetermined magnitude.

0100555

FIGURE 1 is a plan view of the washer.

FIGURE 2 is an end view of FIGURE 1.

FIGURE 3 is a view taken along the lines 3-3 of FIGURE 1.

FIGURE 4 is a view taken along the lines 4-4 of FIGURE 1.

FIGURE 5 is an elevational view of a fastener assembly of this invention prior to tightening the assembly.

FIGURE 6 is a view similar to FIGURE 5 except that the fastener assembly has been tightened.

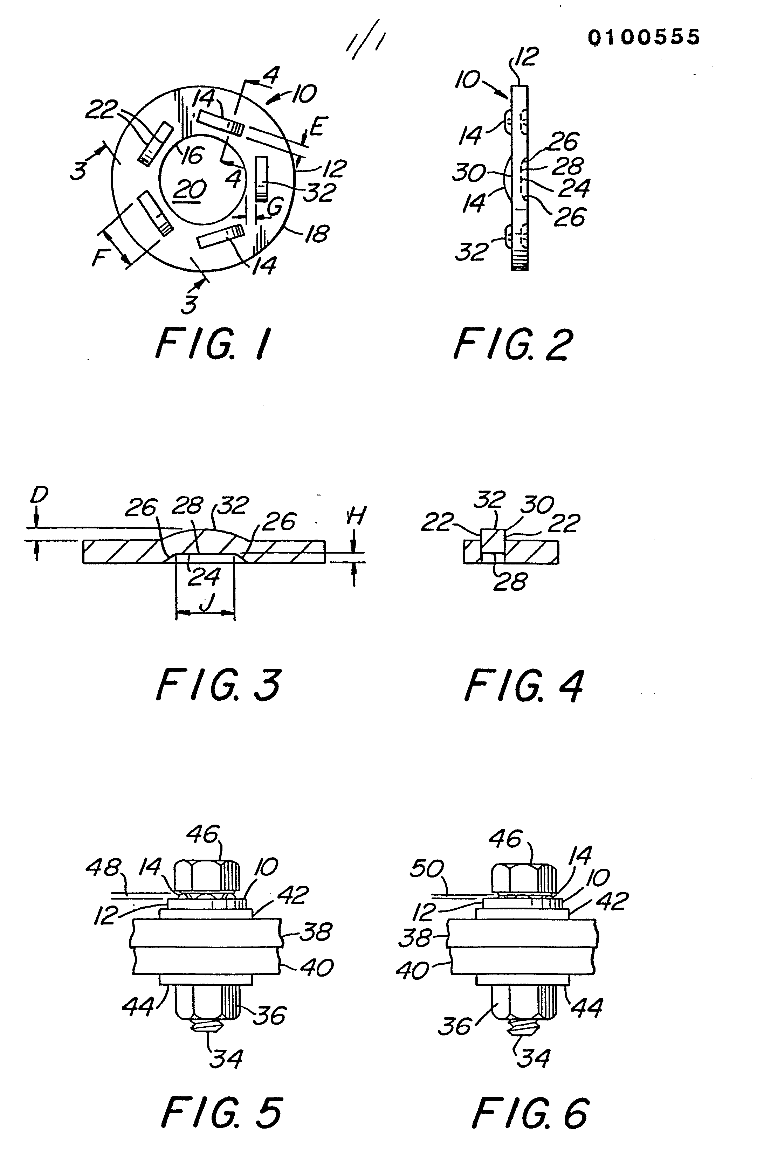

Referring to FIGURES 1 and 2 a load indicating washer 10 has an annular body portion 12 and a plurality of protuberances 14 struck from the material of the washer 10, i.e. the protuberances 14 are an integral part of the washer 10. The washer 10 has an inner periphery 16 and an outer periphery 18. The inner periphery 16 outlines the hole 20 of washer 10. The protuberances 14 extend tangentially to a circle concentric with the inner periphery 16 and are spaced from inner periphery 16 and outer periphery 18. The protuberances 14 in the plan view of FIGURE 1 are oblong in shape and are located at spaced intervals about the body portion 12. The sides 22 of each protuberance 14 are substantially parallel to each other.

Referring to FIGURES 3 and 4, each protuberance 14 is struck from the material of the washer 10 and includes a basal truncated concave surface 24. By basal truncated concave surface 24 is meant the surface formed by arcuate end surfaces 26 and the flat or straight center surface 28. Extending above the plane of the body portion 12 of the washer 10 is a raised portion 30. As shown in FIGURE 4, the raised portion has straight parallel side surfaces 22 and a top convex surface 32.

Referring to FIGURES 5 and 6, a fastener assembly includes a bolt 34 and a nut 36 in threaded engagement for clamping together members 38, 40. Bolt 34 passes through holes in load indicator washer 10, hardened steel flat washer 42, members 38, 40 and standard washer 44. Load indicator washer 10 is positioned such that the protuberances 14 engage the underside of the head 46 of bolt 34. Positioned between the load indi-cator washer 10 and the outer surface of member 38 is a hardened steel washer 42. Positioned between the outer surface of member 40 and nut 36 is a standard washer 44.

FIGURE 5 shows the fastener assembly prior to tightening of the nut 36 and applying a load on bolt 34 as evidenced by the gap 48 between the underside of the head 46 of the bolt 34 and the upper surface of the body portion 12 of the washer 10. This gap 48 is about equal to the height of the raised portion 14 which for a 1.9 cm (3/4 inch) bolt is equal to about 0.94 mm (0.037 inches).

FIGURE 6 shows the fastener assembly after the nut 36 has been tightened and a tensile load has been applied to bolt 34. Note that the gap 50 between the underside of the head 46 of bolt 34 and the upper surface of the body portion 12 of the washer 10 is less than the gap 48 of FIGURE. 5. The reduction between the gap 48 and gap 50 is caused by the load exerted by tightening nut 36 causing protuberances 14 to deform into the body portion 12 of the washer 10. The number and size of the protuberances 14 are such that the average gap 50 is about 0.38 mm (0.015 inches) when the proper tensile load has been applied to the bolt 34. The average gap 50 is arrived at by measuring the gap 50 adjacent each of the protuberances and determining the average of such measurements.

It has been found that a load indicating washer having the following dimensions more uniformly and consistently indicated the proper allowable load in a bolt 34 when the average gap 50 of FIGURE 6 was about 0.38 mm (0.015 inches).

(1)  Bolt 34 was 1.9 cm (3/4 inch) in diameter and known by person skilled in the art as a high-strength structural bolt A325.

(2)  Washer 10 was made from 1040 steel annealed, with a hole 20 size of about 1.98 cm (0.780 inches) to about 2.00 cm (0.790 inches), an outside diameter of about 4.15 cm (1.635 inches) to about 1.635 inches and a body portion 12 thickness of about 3.50 mm (0.138 inches) to about 3.86 mm (0.152 inches).

(3)  The protuberances 14 were five in number spaced as shown in FIGURE 1. Referring to FIGURE 3, D was equal to about 9.4 mm (0.37 inches), H was equal to about 1.14 mm (0.045 inches), J was equal to about 6.86 mm (0.270 inches), the radius for arcuate end surfaces 26 was about 6.93 mm (0.273 inches). Referring to FIGURE 1, E was equal to about 2.54 mm (0.100 inches) to about 2.82 mm (0.110 inches), F was equal to about 10.44 mm (0.411 inches) to about 10.69 mm (0.421 inches) and G was equal to about 2.49 mm (0.098 inches).

(4) Use of the washer 10 as dimensioned above and not heat-treated, allowed bolt 34, described above, to be tensioned to a load of between 12,700 kg (28,000 pounds) to about 15,250 kg (33,600 pounds) and at such load the average gap 50 was consistently about 0.38 mm (0.015 inches).

While I have described my invention hereinabove in considerable detail, I do not wish to be limited narrowly to the exact and specific particulars disclosed, but I may also use such substitutes, modifications and equivalents as are included within the spirit of my invention or pointed out in the appended claims.

Claims:

1. A non-heat treated load indicating washer (10) for visually indicating the magnitude of a compressive force applied by a fastener (34, 36, 46) to opposed faces thereof having a body portion (12), a plurality of protuberances (14) struck from said body portion at spaced intervals and integrally formed with the material of said body portion, said protuberances being spaced from the inner (16) and outer (18) peripheries of said body portion, each protuberance being oblong in outline and defined by substantially parallel side surfaces (22), the improvement comprising each of said protuberances (14) having a truncated concave basal surface (24) lying within the confines of said body portion (12) and a convex surface (32) which extends out of the plane of said body portion, the number and size of said protuberances (14) being dimensioned with respect to said compressive force so that said protuberances will deform into said body portion (12) when said compressive force reaches a predetermined magnitude.

2. A fastener assembly (34, 36, 46) including a bolt (34) having its shank extending through members (38, 40) clamped together by the fastener assembly, a non-heat treated load indicating washer (10) positioned about said shank and interposed between a clamping surface of said fastener assembly and adjacent one surface of said member, said washer having a body portion (12), a plurality of protuberances (14) struck from said body portion at spaced intervals and integrally formed with the material of said body portion (12), said protuberances (14) being spaced from the inner (16) and outer (18) peripheries of said body portion, each protuberance (14) being oblong in outline and defined by substantially parallel side surfaces (22), each of said protuberances having a truncated concave basal surface (24) lying within the confines of said body portion (12) and a convex surface (32) which extends out of the plane of said body portion, the number and size of said protuberances (14) being dimensioned with respect to said compressive force so that said protuberances will deform into said body portion (12) when said compressive force reaches a predetermined magnitude.

0100555

FIG. 1

FIG. 2

FIG. 3

FIG. 4

FIG. 5

FIG. 6

## EUROPEAN SEARCH REPORT

| DOCUMENTS CONSIDERED TO BE RELEVANT | | EP 83107631.0 |
| --- | --- | --- |

| Category | Citation of document with indication, where appropriate, of relevant passages | Relevant to claim | CLASSIFICATION OF THE APPLICATION (Int. Cl. ³) |
| --- | --- | --- | --- |
| D,X | US - A - 3 187 621 (RODNEY FRANCIS TURNER)<br>* Claims 1,2; fig. 1-7 *<br>-- | 1,2 | F 16 B 31/02<br>F 16 B 43/00 |
| X | GB - A - 1 506 674 (COOPER & TURNER LIMITED)<br>* Claims 1-17; fig. 1-8 *<br>-- | 1,2 | |
| X | GB - A - 1 143 398 (COOPER & TURNER LIMITED)<br>* Claims 1-8; fig. 1-4 *<br>-- | 1,2 | |
| A | GB - A - 1 263 385 (STANDARD PRESSED STEEL CO.)<br>* Claim 1; fig. 1-9 *<br>-- | 1,2 | TECHNICAL FIELDS SEARCHED (Int. Cl. ³) |
| A | US - A - 3 948 141 (KATSUMI SHINJO)<br>* Claim 1; fig. 1-11 *<br>-- | 1,2 | F 16 B |
| A | US - A - 4 103 725 (MICHIO ABE)<br>* Columns 1,2; fig. 1-8 *<br>---- | 1,2 | |

The present search report has been drawn up for all claims

| Place of search | Date of completion of the search | Examiner |
| --- | --- | --- |
| VIENNA | 10-10-1983 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82